# EUROPEAN PATENT APPLICATION

(11) **EP 1 734 658 A1**
(43) Date of publication of application: **20.12.2006**
(21) Application number: 06011851.0
(22) Date of filing: 08.06.2006
(51) Int. Cl.: H04B 1/30

(54) **Direct conversion radio apparatus for RFID system**

(30) Priority: 17.06.2005 JP 2005177957; 14.04.2006 JP 2006112225
(71) Applicant: Toshiba TEC Kabushiki Kaisha, Tokyo 141-8664 (JP)
(72) Inventor: Oishi, Sadatoshi, Tokyo 141-8664 (JP)
(74) Representative: Kramer - Barske - Schmidtchen

(57) **Abstract**

A direct conversion radio apparatus comprises a local oscillator (7) which generates a high-frequency signal of almost the same frequency as that of a signal to be received, a modulator (91) which modulates the high-frequency signal generated from the local oscillator (7) in carrier sensing, mixers (5, 6) which frequency-convert a received signal into a baseband frequency by using the high-frequency signal modulated by the modulator (91) in carrier sensing, low-pass filters (11, 13) which limit bands of baseband signals extracted by frequency-converting by the mixers (5, 6), and a baseband circuit (10) which controls the frequency of the high-frequency signal generated from the local oscillator (7) and also performs carrier sensing by amplitude of the baseband signals output from the low-pass filters (11, 13).

## Description

The present invention is relates to a direct conversion radio apparatus.

Such a direct conversion radio apparatus is disclosed in, for instance, Japanese Patent Application (KOKAI) Publication No. 2001-156864.

The radio apparatus in the application receives a modulated reception signal by an antenna and feeds reception signals to an in-phase mixer and an orthogonal phase mixer, respectively.

The in-phase mixer mixes the reception signal and a local oscillation signal to output an in-phase baseband signal. The orthogonal phase mixer mixes the reception signal with a signal obtained by shifting the phase of the local oscillation signal by 90°, thereby generating an orthogonal phase baseband signal.

The in-phase baseband signal is supplied to a baseband processor through an amplifier and the orthogonal phase baseband signal is supplied to the same baseband processor through an amplifier, respectively.

Then, the radio apparatus adds a reception electric field strength signal indicating a level of the in-phase baseband signal and a reception-electric-field strength signal indicating a level of the orthogonal baseband signal and outputs a reception-electric-field strength value.

With this configuration, the radio apparatus can obtain a reception-electric-field strength value reduced in variations caused by undulations of the baseband signal. As a result, the radio apparatus can output a reception-electric-field strength value indicating a state of a reception environment accurately even if a local oscillator has variations in characteristics.

In the meantime, even in the direct conversion radio apparatus, it is possible to measure the reception-electric-field strength with reference to amplitude of a demodulated baseband signal.

On the other hand, there is known an RF tag also referred to as a radio frequency identification (RFID) tag; however as for the RF tag, a power receiving type RF tag to be supplied power supply through a radio wave has been presented.

The power receiving type RF tag makes radio communication to and from an RFID reader/writer. The RFID reader/writer receives a response from the RF tag while transmitting a non-modulated carrier to supply power to the RF tag after inquiring thereto.

It is hard for the direct conversion radio apparatus to theoretically measure a reception electric field strength of a non-modulated wave. Therefore, applying a direct conversion system to a radio communication with the RFID reader/writer causes a problem such that the radio apparatus cannot sense a carrier. That is, a problem arises, in which while one RFID reader/writer receives a response from the RF tag, the other RFID reader/writer positioned near the RFID reader/writer cannot perform carrier sensing for the non-modulated carrier which has been transmitted from the RFID reader/writer.

The impossibility of the carrier sensing in the other RFID reader/writer causes the start of a radio communication by the RF tag even though one RFID reader/writer has been performing the radio communication with the RF tag and causes confusion.

According to an aspect of the present invention provides a direct conversion radio apparatus comprises a local oscillator which generates a high-frequency signal of almost the same frequency as that of a signal to be received, a modulator which modulates the high-frequency signal generated from the local oscillator in carrier sensing, frequency converters which frequency-convert a received signal into a baseband frequency by using the high-frequency signal generated from the local oscillator and also frequency-convert the received signal into the baseband frequency by mixing the received signal with the high-frequency signal modulated by the modulator in carrier sensing, low-pass filters which limit bands of baseband signals extracted by frequency-converting by the frequency converters, and a control circuit which performs carrier sense by amplitude of the baseband signals output from the frequency converters in carrier sensing.

Thereby, even in receiving the non-modulated wave, the radio apparatus can perform the carrier sensing.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary block diagram depicting a configuration of a direct conversion radio apparatus regarding a first embodiment of the present invention;
FIG. 2 is an exemplary view explaining the carrier sensing during modulation performed in the first embodiment and the carrier sensing during the prior-art non-modulation;
FIG. 3 is an exemplary view depicting a baseband signal in non-modulation in the first embodiment;
FIG. 4 is an exemplary block diagram depicting a configuration of a direct conversion radio apparatus regarding a second embodiment of the present invention; and
FIG. 5 is an exemplary view depicting a baseband signal in non-modulation in the second embodiment.

Hereinafter, embodiments of the present invention will be explained in reference to the drawings.

### (First Embodiment)

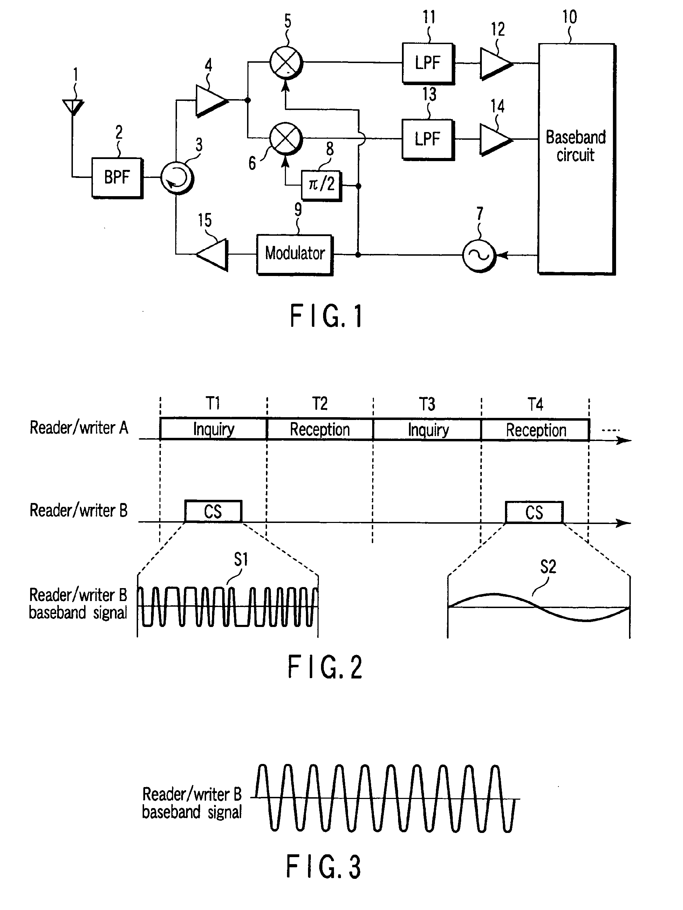

FIG. 1 shows the configuration of the direct conversion radio apparatus. The radio apparatus takes in a high-frequency signal received by an antenna 1 via a band-pass filter (BPF) 2 and a circulator 3. The radio apparatus then inputs taken high-frequency signals to a mixer 5 and mixer 6 constituting frequency converters, respectively, via a low noise amplifier 4.

The radio apparatus further has a local oscillator 7 generating a high-frequency signal with almost the same frequency as a high-frequency signal to be received. The local oscillator 7 feeds the high-frequency signals to the mixer 5 directly and to the mixer 6 via a π/2 phase shifter 8 giving a phase difference of 90°, respectively. The local oscillator 7 feeds the high-frequency signal to a modulator 9.

The local oscillator 7 is controlled by a baseband circuit 10 constituting a control circuit. The baseband circuit 10 includes a central processing unit (CPU) and a memory and operates in accordance with a program stored in advance.

A time to change the frequency of the high-frequency signal generated from the local oscillator 7 and a shift frequency Δf of a predetermined frequency are stared in the memory.

The mixer 5 mixes the received high-frequency signal with the high-frequency signal generated form the local oscillator 7 to output an in-phase baseband.

The in-phase baseband signal passes though a low-pass filter (LPF) 11, is amplified by a low-frequency amplifier 12, and is supplied to the baseband circuit 10.

The mixer 6 mixes the received high-frequency signal with the high-frequency signal generated from the local oscillator 7 given a phase difference of 90° by the phase shifter 8, and outputs an orthogonal baseband signal.

The baseband signal is passed through an LPF 13 to be amplified by a low-frequency amplifier 14 then supplied to the baseband circuit 10.

The baseband circuit 10 demodulates the supplied signals on the basis of the in-phase and orthogonal baseband signals to generate a demodulated signal.

The modulator 9 modulates the high-frequency signal from the local oscillator 7. The high-frequency signal modulated by the modulator 9 is amplified by a power amplifier 15. After this, the circulator 3 and the BPF 2 pass through the modulated high-frequency signal and the antenna 1 transmits it.

In FIG. 1, a DC-cutting capacitor, etc., in a latter stage of the mixers 5 and 6 not directly necessary for this explanation are omitted.

FIG. 2 shows the baseband signals, and the transmission/reception timing of two sets of RFID reader/writers A and B having the direct conversion radio apparatuses (FIG. 1).

The two RFID reader/writers A and B are arranged, for instance, with a distance by which the respective radio waves interfere with each other. T1, T2, T3 and T4 indicate time slots, respectively.

The baseband signals indicate the cases in which the modulation methods of the RFID reader/writers A and B are 100% amplitude shift keying (ASK), respectively.

When reading out information from the power receiving type RF tag, the RFID reader/writer A inquires by using a frequency f1 to the RF tag during a T1 period shown in FIG. 2.

In other words, in the RFID reader/writer A, the modulator 9 modulates the high-frequency signal with the frequency f1 generated from the local oscillator 7. The high-frequency signal modulated by the modulator 9 is power-amplified by a power amplifier 15 and transmitted from the antenna 1 through the circulator 3 and the BPF 2.

When reading in the information by the frequency f1 during the same TI period, the RFID reader/writer B performs carrier sensing by the frequency f1. More specifically, the RFID reader/writer B sets the frequency of the local oscillator 7 to the frequency f1 to start a receiving operation. Then, the RFID reader/writer B receives the modulated wave of the frequency f1 transmitted from the RFID reader/writer A.

When receiving the modulated wave of the frequency f1, the RFID reader/writer B outputs such a baseband signal shown as S1 in FIG. 2 from the low-frequency amplifier 12 or 14.

The RFID reader/writer B measures the amplitude of the baseband signal by the baseband circuit 10 and determines the presence of a carrier if the amplitude becomes equal to a prescribed level or more.

In a period of T4 in FIG. 2, the RFID reader/writer A transmits the non-modulated wave of the frequency f1 to receive a response wave from the RF tag while supplying power to the RF tag.

When the RFID reader/writer B senses the carrier by using the frequency f1 during the same T4 period, the baseband circuit 10 of the RFID reader/writer B shifts the frequency f1 generated from the local oscillator 7 to a frequency of f1+Δf in a prescribed period, for example, 5 msec.

Here, a shift frequency Δf is set as follows.

Since the baseband signal of which the pass band is limited by cut-off frequencies of the LPFs 11 and 13, the shift frequency Δf has to be set not more than the cut-off frequencies of the LPFs 11 and 13.

Usually, since a modulation speed (frequency) at which the RF tag make a response is not more than both cut-off frequencies of the LPFs 11 and 13, the shift frequency Δf may be set to the modulation speed of the RF tag or less.

For example, if f1=953 MHz and Δf=40 kHz are satisfied, the baseband circuit 10 of the RFID reader/writer B changes the frequency from the local oscillator 7 to 953.04 MHz. The high-frequency signal of 953.04 MHz is supplied to the mixer 5 and further supplied to the mixer 6 through the π/2 phase shifter 8.

When the RFID reader/writer B receives the non-modulated transmission wave from the RFID reader/writer A, the mixer 5 of the RFID reader/writer B mixes the received non-modulated signal of 953 MHz with the high-frequency signal of 953.04 MHz to output the in-phase baseband signal. The in-phase baseband signal is supplied to the low-frequency amplifier 12 via the LPF 11.

The mixer 6 of the RFID reader/writer B mixes the received non-modulated signal of 953 MHz with the high-frequency of 953.04 MHz given the phase difference of 90° and outputs the orthogonal baseband signal. The orthogonal baseband signal is supplied to the low-frequency amplifier 14 via the LPF 13.

The low-frequency amplifier 12 or 14 of the RFID reader/writer B outputs a baseband signal of around 40 kHz, as shown in FIG. 3.

The baseband circuit 10 of the RFID reader/writer B measures amplitude of the baseband signals from the low-frequency amplifiers 12 and 14, respectively. If the amplitude is not less than the prescribed level, the baseband circuit 10 determines the presence of a carrier and the RFID reader/writer B does not perform a transmission for reading the RF tag. If each amplitude is less than the prescribed level, the baseband circuit 10 determines non-presence of the carrier. After the elapse of 5 msec, the baseband circuit 10 changes back the frequency from the local oscillator 7 into the frequency f1.

Like this, while the RFID reader/writer A transmits the non-modulated wave of the frequency f1 to the RF tag, the direct conversion radio apparatus of the RFID reader/writer B shifts the frequency of the local oscillator 7 from f1 to f1+Δf temporarily to sense the carrier.

Thereby, the RFID reader/writer B can perform the carrier sensing of the non-modulated wave of the frequency f1 which has been transmitted from the RFID reader/writer A.

A conventional direct conversion radio apparatus will be described for comparison.

If a RFID reader/writer B with a conventional direct conversion radio apparatus mounted thereon performs the carrier sense in the T4 period in which the RFID reader/writer A conducts a non-modulated wave transmission, the RFID reader/writer B outputs, as a baseband signal, only a signal almost direct current shown as S2 in FIG. 2.

Actually, there exists a deviation of several 10 ppm between the frequencies of the local oscillators 7 of the RFID reader/writers A and B, so that the frequency difference between both of the local oscillators 7 appears as a beat frequency at a base signal. However, the frequency deviation is so small that the RFID reader/writers B cannot measure the reception electric field strength from the amplitude of the baseband signal.

Consequently, the RFID reader/writer B with the conventional direct conversion radio apparatus mounted thereon cannot perform the carrier sensing in the T4 period in which the RFID reader/writer A has been performing the non-modulated wave transmission.

### (Second Embodiment)

In a second embodiment, the same units as those of the first embodiment will be give the same symbols as those of the first embodiment.

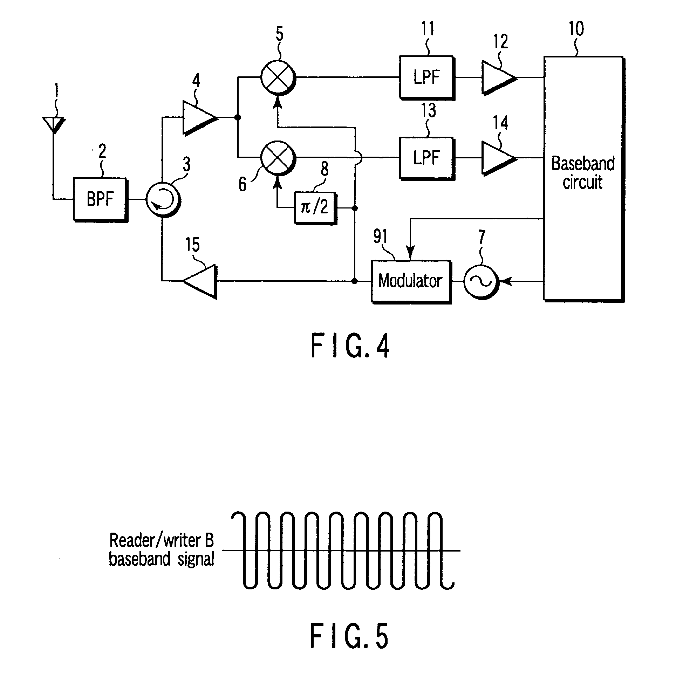

A direct conversion radio apparatus, as shown in FIG. 4, modulates a high-frequency signal from the local oscillator 7 by a modulator 91 then directly feeds it to the mixer 5 and also feeds it to the mixer 6 via the π/2 phase sifter 8.

The modulator 91 is controlled by the baseband circuit 10 constituting a control circuit. The radio apparatus also feeds the signal modulated by the modulator 91 to the power amplifier 15.

A period, speed and modulation signal for modulating the received signal by the modulator 91 are set in a memory included in the baseband circuit 10.

Other constituent units are the same as those of FIG. 1.

As shown in FIG. 2, when the RFID reader/writer B with the direct conversion radio apparatus having such a configuration mounted thereon performs the carrier sensing during the T4 period in which the RFID reader/writer A has been performed the non-modulated wave transmission, the baseband circuit 10 controls the modulator 91. With this control, the output from the local oscillator 7 is ASK-modulated by the modulator 91 only for the prescribed time period, for instance, 5 msec.

The modulation speed at this moment is needed to be set to the cut-off frequency of each of the LPFs 11 and 13 or less. Here, it is desirable to be set equal to a modulation speed during transmission/reception of the RF tag. For instance, if the modulation speed of the transmission/reception is 100 kbps, the modulator 91 modulates the received signal at the modulation speed of 100 kbps. It is preferable for the modulation signal to be a periodic code such as "0101".

Each high-frequency signal ASK-modulated by the modulator 91 is supplied to the mixer 5 and to the mixer 6 via the π/2 phase shifter 8, respectively.

When the RFID reader/writer B receives the non-modulated transmission wave from the RFID reader/writer A, the mixer 5 of the RFID reader/writer B mixes the received non-modulated signal with the ASK-modulated high-frequency signal to output an in-phase baseband signal. The baseband signal is supplied to the low-frequency amplifier 12 via the LPF 11.

The mixer 6 of the RFID reader/writer B mixes the received non-modulated signal with the high-frequency signal ASK-modulated and also given the phase difference of 90° to output an orthogonal baseband signal. The baseband signal is supplied to the low-frequency amplifier 14 via the LPF 13.

The low-frequency amplifier 12 or 14 of the RFID reader/writer B outputs a baseband signal of around 100 kHz as shown in FIG. 5.

The baseband circuit 10 of the RFID reader/writer B measures the amplitude of the baseband signals from the low-frequency amplifiers 12 and 14. Then, if the amplitude is not less than the prescribed level, the baseband circuit 10 determines the presence of the carrier and does not perform a transmission for reading the RF tag. If the amplitude is less than the prescribed level, the baseband circuit 10 determines absence of the carrier. After the elapse of 5 msec, the baseband circuit 10 stops modulation of the modulator 91.

As mentioned-above, also in the second embodiment, while the RFID reader/writer A makes a non-modulation communication with a radio tag, the direct conversion radio apparatus of the RFID reader/writer B can perform the carrier sensing by temporarily ASK-modulating the frequency of the local oscillator 7 by the modulator 91.

Having used the ASK modulation as a modulation method for modulating the frequency of the local oscillator 7 in this second embodiment, the present invention is not limited to such a configuration, and frequency shift keying (FSK) modulation or phase shift keying (PSK) modulation may be suitable. The modulation speed in this case is needed to be set to the cut-off frequency of each of the LPFs 12 and 14 or less.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A direct conversion radio apparatus, **characterized by** comprising:
a local oscillator (7) which generates a high-frequency signal of almost the same frequency as that of a signal to be received;
a modulator (91) which modulates the high-frequency signal generated from the local oscillator (7) in carrier sensing;
a frequency converter (5, 6) which frequency-convert a received signal into a baseband frequency by using the high-frequency signal generated from the local oscillator (7) and also frequency-convert the received signal into the baseband frequency by using the high-frequency signal modulated by the modulator (91) in carrier sensing;
a low-pass filter (11, 13) which limit bands of baseband signals extracted by frequency-converting by the frequency converter (5, 6); and
a control circuit (10) which performs carrier sense by amplitude of the baseband signals output from the frequency converter (5, 6) in carrier sensing.

2. The direct conversion radio apparatus according to claim 1, **characterized in that** the control circuit (10) further controls a frequency of the high-frequency signal generated from the local oscillator (7).

3. The direct conversion radio apparatus according to claim 1, **characterized in that** the modulator (91) sets a modulation speed, by which the modulator (91) modulates the high-frequency signal generated from the local oscillator (7), to a cut-off frequency of each of the low-pass filter (11, 13) or less.

4. The direct conversion radio apparatus according to claim 3, **characterized in that** the modulator (91) further modulates the high-frequency signal from the local oscillator (7) for a predetermined time in carrier sensing.

5. The direct conversion radio apparatus according to claim 1, **characterized in that** the modulator (91) further modulates the high-frequency signal from the local oscillator (7) for a predetermined time in carrier sensing.

6. The direct conversion radio apparatus according to claim 1, **characterized in that**
the frequency converter (5, 6) has a pair of mixers,
one mixer (5) mixes a received non-modulated signal with the high-frequency signal modulated by the modulator (91) to output an in-phase baseband signal in carrier sensing and
the other mixer (6) mixes the received non-modulated signal with the high-frequency signal modulated by the modulator (91) and also given a phase difference of 90° and outputs an orthogonal baseband signal in carrier sensing.

7. The direct conversion radio apparatus according to claim 6, **characterized in that** the two mixers (5, 6) set a modulation speed, by which the modulator (91) modulates the frequency signal from the local oscillator (7), to a cut-off frequency of each of the low-pass filter or less.

8. The direct conversion radio apparatus according to claim 1, **characterized in that** the control circuit (10)
shifts the frequency of the high-frequency signal generated from the local oscillator (7) by a shift frequency Δf from a reception frequency and performs carrier sensing by amplitude of the shift frequency Δf caused by the received signal and the high-frequency signal generated from the local oscillator (7).

9. The direct conversion radio apparatus according to claim 8, **characterized in that** the control circuit (10) sets the shift frequency Δf of the high-frequency signal from the local oscillator (7) to a cut-off frequency of each of the low-pass filter (11, 12) or less.

10. The direct conversion radio apparatus according to claim 8, **characterized in that**
the frequency converter (5, 6) are mixers,
one mixer (5) mixes a received non-modulated signal with the high-frequency signal from the local oscillator (7) to output an in-phase baseband signal in carrier sensing, and
the other mixer (6) mixes the received non-modulated signal with the high-frequency signal generated from the local oscillator (7) and given a phase difference of 90° and outputs an orthogonal baseband signal in carrier sensing.
